# EUROPÄISCHE PATENTSCHRIFT

(11) **EP 1 213 517 B1**
(45) Veröffentlichungstag und Bekanntmachung des Hinweises auf die Patenterteilung: **09.11.2005**
(21) Anmeldenummer: 01128867.7
(22) Anmeldetag: 05.12.2001
(51) Int. Cl.: F16J 15/34, B01F 15/00, F04D 29/10

(54) **Gleitringdichtung für Strömungsmaschinen**
Mechanical seal for fluid-flow machines
Joint mécanique pour turbo machines

(30) Priorität: 05.12.2000 DE 10060617; 27.01.2001 DE 10103575
(43) Veröffentlichungstag der Anmeldung: 12.06.2002
(73) Patentinhaber: Emu Unterwasserpumpen Gmbh, 95030 Hof (DE)
(72) Erfinder: Rietsch, Peter, 95194 Regnitzlosau (DE)
(74) Vertreter: LOUIS, PÖHLAU, LOHRENTZ

(56) Entgegenhaltungen:
- WO-A-98/05890
- GB-A- 975 076
- US-A- 2 802 679
- US-A- 3 558 238

## Beschreibung

Die Erfindung betrifft eine Maschine, vorzugsweise Strömungsmaschine, z.B. Pumpe, Rührwerk oder dergleichen mit den Merkmalen des Oberbegriffs des Anspruchs 1 sowie ein Rad, als Laufrad oder Propeller ausgebildet, mit den Merkmalen des Oberbegriffs des Anspruches 24.

Aus der EP 0 252 037 B1 ist eine Dichtungseinrichtung für ein Rührwerk oder eine Pumpe bekannt, die bereits eine im Bereich eines Ringspalts zwischen der Nabe des angetriebenen Rads und einer Gehäuseaufnahme eine Spiraleinrichtung vorsieht, um einer Artikelablagerung in dem Ringspalt durch Erzeugung einer aus dem Ringspalt gerichteten Strömung entgegenzuwirken. Die Spiraleinrichtung ist bei dieser bekannten Einrichtung dadurch ausgebildet, daß in der Innenwandung der Gehäuseaufnahme und in der Außenwandung der in die Gehäuseaufnahme eingreifenden Nabe eine spiralförmige Oberflächenstruktur ausgeformt ist. Der Ringspalt ist als zylindrischer Ringspalt zwischen diesen einander gegenüberliegenden konzentrischen, gewissermaßen mit Außen- und Innengewinde versehenen Wandungen ausgebildet. Bei Drehung der Nabe in der Gehäuseaufnahme entsteht in dem Ringspalt eine nach außen gerichtete Strömung, mit der Partikel nach außen transportiert werden sollen. Am oberen Rand der Gehäuseaufnahme ist eine Schneideinrichtung ausgebildet, indem an dem ringförmigen Rand der Gehäuseaufnahme und an der Nabe Schneidkanten ausgebildet sind, die bei Drehung der Nabe miteinander zusammenwirken und die Partikel möglichst stark verkleinern sollen. Diese Einrichtung ist konstruktiv relativ aufwendig, da sie eine Bearbeitung jeweils mehrerer miteinander zusammenwirkender, besonders bearbeiteter Flächen vorsieht. Es können Störungen im Betrieb auftreten, insbesondere, wenn größere Mengen an größeren Partikeln vorhanden sind, denn einerseits wird durch die Zerkleinerung der Partikel die Menge an in dem Ringspalt sedimentierbarem Material erhöht und andererseits können im Bereich der Schneideinrichtung selbst Verstopfungen eintreten, insbesondere wenn einmal ein gewisser Verschleiß der Schneideinrichtungen eingetreten ist.

Aus der US 6 053 500 A ist eine andere Dichtungseinrichtung für eine Welle eines Pumpenlaufrads bekannt. Bei dieser Einrichtung ist im Bereich der Innenwandung der Gehäuseausnehmung, in die die Nabe des Pumpenrads eingreift, ein gehäusefest in der Gehäusewandung der Ausnehmung ausgeformter Schraubengang vorgesehen, um einer Partikelablagerung entgegenzuwirken. Bei Drehung der Nabe in der Gehäuseausnehmung entsteht eine Strömung in der Gehäuseausnehmung, mit der Partikel in gewissen Maßen außen mitgenommen werden.

Aus der EP 0 542 530 B1 ist eine Dichtung für eine Welle vorgesehen, bei der das Dichtungselement selbst spiralförmige Struktur aufweist und dadurch bei der Drehung der Welle eine im Bereich der Dichtung nach außen gerichtete Strömung erzeugt wird, wodurch einer Ablagerung von Partikeln in gewissem Umfang entgegengewirkt wird.

Aus der EP 0 879 977 A2 ist eine weitere Dichtungseinrichtung für eine Welle bekannt, bei der das aus polymerem Werkstoff bestehende Dichtungselement Dichtlippen mit unterschiedlich steilem Kegelwinkel aufweisen, welche mit der umfangsseitigem Dichtfläche auf der Welle zusammenwirken, wobei die Welle in diesem Bereich wendelförmig verlaufenden Nuten mit Nuttiefe weniger als 15 µm aufweist, um zur Schmierung der Dichtkanten während der Drehung der Welle Schmiermittel in den Dichtungsbereich zurück zu transportieren.

Aus der US 3,558,238, die den nächstkommenden Stand der Technik bildet, ist eine Zentrifugalpumpe bekannt, die in dem Spalt zwischen der Wand des Pumpengehäuses und der Nabe des Flügelrades einen Ring mit offenen Gewindegängen aufweist.

Der Erfindung liegt die Aufgabe zugrunde, eine Maschine der eingangs genannten Art im Bereich der Dichtung und Lagerung der Welle so auszubilden, daß eine Ablagerung von Partikeln im Bereich der mediumseitigen Dichtung der Welle auf konstruktiv einfache Weise mit möglichst hoher Funktionssicherheit entgegen gewirkt wird. Es werden dabei auch Ausführungen angestrebt, mit denen einem Umwickeln der Nabe mit in dem Medium eventuell enthaltenen faserigen Bestandteilen entgegengewirkt wird. Ferner liegt der Erfindung die Aufgabe zugrunde, ein Rad, vorzugsweise als Propeller oder Laufrad einer solchen Maschine ausgebildet, zu schaffen, das einer Ablagerung von Partikeln in seinem Lager und einem Umwickeln der Nabe entgegenwirkt.

Diese Aufgabe löst die Erfindung mit einer Maschine gemäß Anspruch 1 sowie mit einem Rad, das als Laufrad oder Propeller gemäß Anspruch 7 ausgebildet ist.

Durch Ausgestaltung des Ringspalts mit zum Austritt hin zunehmendem Außendurchmesser wird eine konische Ausbildung des Ringspalts erhalten. Diese verstärkt die bei der Drehung der Nabe aufgrund der Spiraleinrichtung erzeugte Strömung im Ringspalt im Sinne einer ausgeprägten nach außen gerichteten vorzugsweise spiralförmigen Strömung. Durch zunehmenden Querschnitt des Ringspalts wird die nach außen gerichtete Strömung ebenfalls verstärkt und einer Verstopfung des Ringspalts entgegengewirkt.

Die Spiraleinrichtung ist drehfest mit der Nabe ausgebildet als spiralförmig an der Außenwandung der Nabe verlaufende Erhöhungen. Die spiralförmigen Erhöhungen können sich als zusammenhängende kontinuierlichen Spiralen um die Nabe erstrecken, sie können aber auch als unterbrochene Spiralabschnitte nur bereichsweise ausgebildet sein. Bei bevorzugten Ausführungen sind die spiral- oder schraubenförmigen Ausformungen unmittelbar in der Außenwand der Nabe ausgeformt, gewissermaßen als spiral- oder schraubenförmige Oberflächenstrukturierung in Art eines Außengewindes. Die Innenwandung der topfförmigen Gehäuseausnehmung, in die die derart ausgestaltete Nabe unter Ausbildung des Ringspaltes eingreift, kann als vorzugsweise konische oder kegelförmige Innenfläche ausgebildet sein. Auf eine mit der nabenseitigen Spiraleinrichtung zusammenwirkende Spiraleinrichtung im Bereich der Innenwandung der Gehäuseausnehmung - muß aber nicht - kann verzichtet werden, wodurch sich fertigungstechnische Vorteile ergeben. Auch auf eine Schneideinrichtung im Bereich des Ringspalts kann verzichtet werden, denn mit den obengenannten Maßnahmen wird im Bereich des Ringspalts eine besonders starke und effektive nach außen gerichtete Strömung erzeugt, die den Abtransport auch relativ großer Partikel und insbesondere von Fasern sicherstellt.

Bei bevorzugten Ausführungsbeispielen ist vorgesehen, daß die Spiraleinrichtung derart ausgebildet ist, daß die radiale Höhe der Erhebungen auf einem in die topfförmige Gehäuseausformung eintauchenden Abschnitt in einem Größenbereich von 2 mm bis 10 mm liegt, insbesondere in einem Größenbereich um 3 mm, vorzugsweise bei einem Durchmesser der Radnabe von 30 bis 50 mm oder im Größenbereich von 4 mm, vorzugsweise bei einem Durchmesser der Radnabe von 50 bis 90 mm. Die radiale Höhe der spiralförmig verlaufenden Erhebung während ihres Verlaufs zum Rad hin ist zunehmend ausgebildet.

Bei bevorzugten Ausführungen ist vorgesehen, daß die radiale Außenwand der spiralförmig verlaufenden Erhebung während ihres Verlaufs konstanten Abstand zur Innenwandung der topfförmigen Ausnehmung des Gehäuses aufweist, wobei vorzugsweise vorgesehen ist, daß der Abstand im Größenbereich von 0,2 bis 3 mm liegt, insbesondere bei 0,5 mm, vorzugsweise bei einem Durchmesser der Radnabe von 90 mm oder bei 1 mm, vorzugsweise bei einem Durchmesser der Radnabe von 170 mm.

Bei bevorzugten Ausführungen ist vorgesehen, daß die Außenwandung der Radnabe zylinderförmig oder konisch ausgebildet ist und daß die Innenwandung der topfförmigen Gehäuseausnehmung zylinderförmig oder konisch ausgebildet ist. Es kann vorgesehen sein, daß ein die Konizität der Radnabe bestimmender Konuswinkel kleiner ist als ein die Konizität der topfförmigen Gehäuseausnehmung bestimmender Konuswinkel. Es kann vorgesehen sein, daß ein die Konizität der Radnabe bestimmender Konuswinkel auf verschiedenen axialen Abschnitten der Radnabe unterschiedlich groß ausgebildet ist. Bei besonders bevorzugten Ausführungen ist vorgesehen, daß ein die Konizität der topfförmigen Gehäuseausnehmung bestimmender Konuswinkel auf verschiedenen axialen Abschnitten der topfförmigen Gehäuseausformung unterschiedlich groß ausgebildet ist, vorzugsweise in Abhängigkeit von dem die Konizität der Radnabe bestimmenden Konuswinkel, z.B. unter Ausbildung eines sich kontinuierlich erweiternden Spalts.

Bei bevorzugten Ausführungen kann vorgesehen sein, daß ein die Konizität der Radnabe bestimmender Konuswinkel im Bereich zwischen 0,5° bis 10°, vorzugsweise bei 1°, liegt, insbesondere bei einem Durchmesser der Radnabe von 30 bis 50 mm. Es kann auch vorgesehen sein, daß ein die Konizität der topfförmigen Gehäuseausnehmung bestimmender Konuswinkel im Bereich zwischen 1° bis 13°, vorzugsweise bei 2° liegt, insbesondere bei einem Querschnittsdurchmesser der topfförmigen Gehäuseausführung von 50 bis 90 mm.

Bei bevorzugten Ausführungen ist vorgesehen, daß die Radnabe an ihrem von den Propellerflügeln bzw. Radschaufeln entfernten Stirnende eine nach außen offene koaxiale Ausnehmung, vorzugsweise zur drehfesten Aufnahme eines Wellenendes und/oder zur Aufnahme einer Dichtungseinrichtung aufweist. Es kann hierbei vorgesehen sein, daß die koaxiale Ausnehmung als Stufenausnehmung ausgebildet ist mit einem koaxialen inneren Abschnitt zur drehfesten Aufnahme der Welle und einem koaxialen äußeren Abschnitt mit größerem Durchmesser zur Aufnahme der Dichtungseinrichtung.

Abgesehen davon wird die Ablagerung von Partikeln im Ringspalt auch durch eine besondere Anordnung und Ausgestaltung der Dichtung verhindert. Die Radnabe kann hierzu eine an der vom Rad abgewandten Stirnseite hin offene koaxiale Ausnehmung aufweisen, in der zumindest ein Teil der Dichtung angeordnet ist. Die Dichtung kann einen eine gehäuseseitige Dichtfläche aufweisenden gehäusefesten Gleitring aufweisen, der im Bereich einer von der Welle durchsetzten Gehäuseöffnung angeordnet ist. Als weiteren Bestandteil kann die Dichtung einen mit der Welle bzw. Nabe drehfesten Gleitring aufweisen, der innerhalb der Ausnehmung der Nabe angeordnet ist. Er kann mit einem eine wellen- oder nabenseitige Dichtfläche aufweisenden elastischen Dichtelement zusammenwirken, das ebenfalls innerhalb der Ausnehmung der Nabe angeordnet ist. Der Ringspalt, der zwischen der Außenwandung der Nabe und der Innenwandung der topfförmigen Gehäuseausnehmung ausgebildet ist, ist somit zwar in unmittelbarer Nähe der Dichtung ausgebildet, jedoch mit radialem und/oder axialem Abstand der Dichtung angeordnet, denn der Ringspalt befindet sich an der Außenseite der Nabe, während die Dichtung weitgehend innerhalb der inneren koaxialen Ausnehmung der Nabe angeordnet ist. Somit wird einerseits die Bildung von Ablagerungen von Partikeln durch die Strömung im Ringspalt verhindert und andererseits wird aufgrund der geschützten Anordnung der Dichtung innerhalb der Ausnehmung in der Nabe erreicht, daß die Dichtung für eine Ablagerung von Partikeln nicht zugänglich bzw. nicht umströmt ist und aufgrund der besonderen Ausgestaltung mit Gleitringen auch die Gefahr von Beschädigung der Dichtung durch eventuelle Ablagerungen reduziert wird. Der gehäusefeste Gleitring und/oder der mit der Welle bzw. der Nabe drehfeste Gleitring kann aus keramischem Material, z.B. Siliciumcarbid ausgebildet sein. Mit diesem Material ergeben sich besonders gute Gleit- und Dichtungseigenschaften und besondere Robustheit gegen Beschädigungen durch Partikelablagerungen und Verzopfungen.

Bei bevorzugten Ausführungen ist vorgesehen, daß das elastische Dichtelement als elastischer Balg, vorzugsweise Gummibalg ausgebildet ist, der sich mit einem Ende an dem mit der Welle bzw. Nabe drehfesten Gleitring abstützt und mit seinem anderen Ende an der Nabe und/oder der Welle, vorzugsweise im Bereich des inneren Stirnendes der Ausformung der Nabe abstützt. Es kann auch vorgesehen sein, daß das elastische Dichtelement über eine Feder in Dichtungsstellung beaufschlagt ist, wobei vorzugsweise vorgesehen ist, daß die Feder als eine das elastische Dichtelement umgebende Schraubendruckfeder ausgebildet ist. Die Dichtung kann als Gleitringdichtung ausgebildet sein. Der gehäusefeste Gleitring und/oder der mit der Welle und/oder Nabe drehfeste Gleitring kann aus keramischem Material, vorzugsweise Siliciumcarbid, ausgebildet sein. Bei besonders bevorzugten Ausführungen kann vorgesehen sein, daß die Ausnehmung der Nabe als topfförmige Ausnehmung mit im wesentlichen konstantem Querschnitt ausgebildet ist. Es kann auch vorgesehen sein, daß die Ausnehmung der Nabe sich von der vom Rand abgewandten Stirnseite der Nabe entlang der Hälfte oder einem Drittel der axialen Länge der Nabe erstreckt. Ferner kann auch vorgesehen sein, daß die Nabe im wesentlichen mit ihrer gesamten axialen Länge in die topfförmige Ausnehmung des Gehäuses eingreifend ausgebildet ist.

Bei bevorzugten Ausführungsbeispielen ist vorgesehen, daß die Ausnehmung in der Nabe sich von der vom Rad abgewandten Stirnseite der Nabe entlang der Hälfte oder einem Drittel der axialen Länge der Nabe erstreckt. Damit wird ausreichend Bauraum für die Dichtung erhalten.

Bei bevorzugten Ausführungen, die eine besonders starke Strömung im Ringspalt erbringen, ist vorgesehen, daß die Spiraleinrichtung sich an der Außenseite der Nabe von dem vom Rad abgewandten Stirnende der Radnabe bis zur Unterseite des Rads hin oder bis in eine Position mit axialem Abstand vorzugsweise geringem axialem Abstand von der Unterseite des Rads hin erstreckt. Als günstig für die wirkungsvolle Strömung im Ringspalt erweist sich, wenn die Spiraleinrichtung sich zunächst über die gesamte axiale Länge des Außenumfangs des Nabenabschnitts erstreckt, der in die topfförmige Gehäuseausnehmung eingreift und mit der Innenwandung der Gehäuseausnehmung unmittelbar den Ringspalt bildet. Durch eine Fortsetzung der Spiraleinrichtung an der Außenseite der Nabe bis hin zur Unterseite des Rads hin kann hierbei den Abtransport der Partikel vom Bereich des Austritts des Ringspalts verstärken und somit Verstopfungen des Ringspalts vorbeugen. Eine besonders effektive Strömung kann erreicht werden, wenn die Spiraleinrichtung in die Arbeitsflächen des Rads, vorzugsweise in die Radschaufeln übergehend ausgebildet ist.

Das Rad kann als Laufrad mit Laufradschaufeln oder als Propeller mit Propellerflügeln jeweils entsprechend ausgebildet sein. Die Spiraleinrichtung kann einstückig mit der Radnabe ausgebildet sein. Die Spiraleinrichtung kann aber auch als ein auf oder im Bereich der Radnabe angeordneter separater Körper ausgebildet sein, vorzugsweise als Teil einer gegossenen Radnabe oder als separat eingebrachtes Teil aus einem verschleißfesten Werkstoff.

Bei bevorzugten Ausführungen des Propellers kann die Nabe des Propellers in dem Bereich, wo die Propellerflügel angeformt sind, eine Verdickung des Nabenaußendurchmessers aufweisen, so daß zwischen diesem Nabenbereich, in dem die Propellerflügel angeordnet sind, und den daran anschließenden Nabenbereich, der von den Propellerflügeln entfernt ist, ein Übergangsbereich ausgebildet ist, der abgeschrägt, abgestuft oder abgerundet sein kann. Die Verdickung der Nabe ist insbesondere bei Ausführungsbeispielen von Propellern mit mehr als zwei Flügeln vorgesehen, z.B. bei einem dreiflügligem Propeller. Bei zweiflügligen Propellern kann auf die Verdickung der Nabe meist verzichtet werden. Die Verdickung ist bei Propellern mit mehreren Flügeln erforderlich oder zumindest zweckmäßig, um die Anformung der Propellerflügel am Außenumfang der Nabe unterzubringen. Insbesondere aus Fertigungsgründen wird die Verdickung bei Propellern mit relativ großem Durchmesser im wesentlichen kugelförmig ausgebildet, bei Propellern mit kleinerem Durchmesser kann die Verdickung als zylinderförmiger Abschnitt ausgebildet sein. Entsprechendes gilt für Ausführungen des Rades als Laufrad mit Laufradschaufeln.

Bevorzugte Ausführungsbeispiele der Erfindung werden im nachfolgenden anhand der Figuren näher erläutert. Dabei zeigt:
- Fig. 1: eine Schnittansicht eines Rührwerks im Bereich des Propellers und des Dichtungsgehäuses;
- Fig. 2: eine Fig. 1 entsprechende Schnittansicht eines Rührwerks mit größerem Propeller;
- Fig. 3: eine Schnittansicht einer Pumpe im Bereich des Laufrads und des Dichtungsgehäuses.

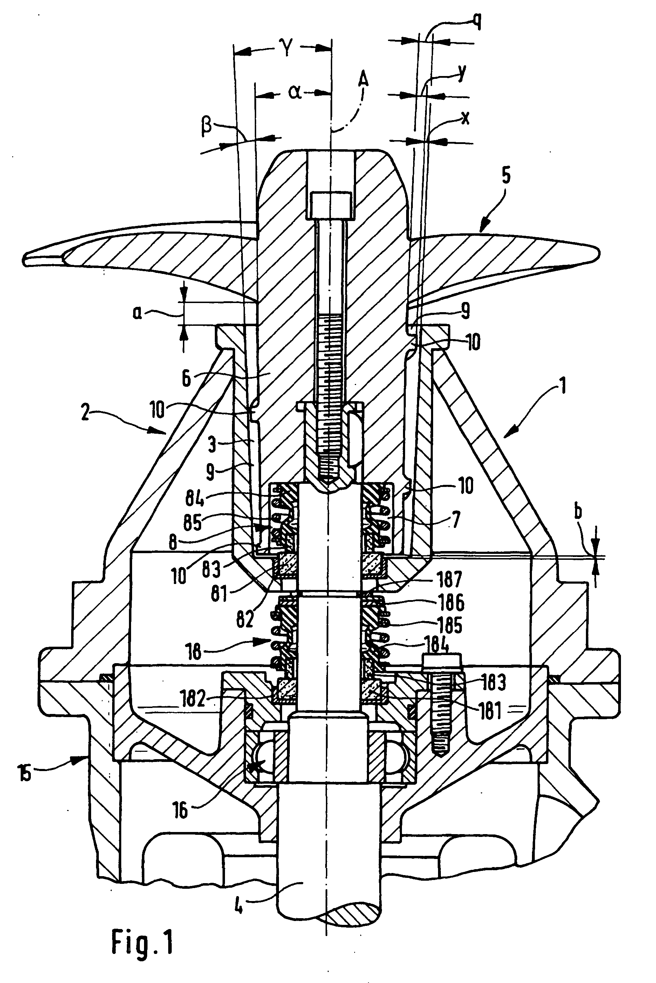

Bei dem Ausführungsbeispiel in Fig. 1 handelt es sich um ein Tauchrührwerk zum Einsatzunter Wasser, z.B. in Klärbecken. Das Rührwerk weist ein ortsfest unter Wasser anordenbares Gehäuse 1 auf. In Fig. 1 ist der obere Abschnitt des Gehäuses 1 im Bereich des Dichtungsgehäuses 2 gezeigt. In dem Dichtungsgehäuse 2 ist eine topfförmige Gehäuseausnehmung 3 ausgebildet, durch die die motorisch angetriebene Welle 4 hindurchkragt. An dem durchgreifenden freien Ende der Welle 4 ist ein Propeller 5 drehfest angeordnet. Die Propellernabe 6 greift dabei in die topfförmige Gehäuseausnehmung 3 ein. Sie verläuft koaxial mit der topfförmigen Ausnehmung 3 unter Ausbildung eines ringspaltförmigen Raums zwischen der Innenwandung der Gehäuseausnehmung 3 und der Außenwandung der Nabe 6.

Die Unterseite des Propellers 5, d.h. der untere Rand der Propellerblätter ist mit Abstand a oberhalb des oberen freien Rands der topfförmigen Gehäuseausnehmung 3 angeordnet. Die Nabe 6 erstreckt sich auf der vom Propeller abgewandten Seite in die topfförmige Ausnehmung 3 hinein und reicht bis zum Bereich des Bodens der Gehäuseausnehmung 3. Das vom Propeller abgewandte Stirnende der Nabe 6 ist dabei mit geringem Abstand, Abstand b, vom Grund der Gehäuseausnehmung 3 angeordnet.

In der Nabe 6 ist an dem vom Propeller 5 abgewandten Stirnende eine koaxiale zylindrische Ausnehmung 7 angeordnet, die einen topfförmigen Aufnahmeraum bildet, in den eine auf der Welle 4 angeordnete Dichtung 8 eingreift. Im gesamten Raum außerhalb des Gehäuses 1 und somit auch in der Gehäuseausnehmung 3 und in der Ausnehmung 7 der Nabe 6 ist das Medium, vorzugsweise Wasser, in dem das Rührwerk, das als Tauchrührwerk ausgebildet ist, steht und das von dem Rührwerk durch Rühren mittels des Propellers 5 bewegt wird.

Die Dichtung 8 bildet eine mediumseitige Abdichtung zwischen dem Gehäuse, d.h. zwischen dem Dichtungsgehäuse 2 und Nabe 6 und Welle 4. Die Dichtung ist als Gleitringdichtung ausgebildet. Sie weist einen Gleitring 81 auf, der in einer in einem abgestuften Rand am Grund der Gehäuseausnehmung 7 angeordneten Winkelmanschette 82 unter Ausbildung einer gehäuseseitigen Dichtfläche gehäusefest angeordnet ist. Der Gleitring 81 ist aus keramischem Material ausgebildet, z.B. Siliciumcarbid. Er umgibt die Welle 4, verbleibt jedoch bei Drehung der Welle 4 gehäusefest, so daß also die Welle 4 in dem feststehenden Gleitring 81 gleitend dreht. Auf dem Gleitring 81 stützt sich ein Gleitring 83 ist ab, der ebenfalls die Welle 4 umgibt. Der innere Durchmesser des Gleitrings 83 ist jedoch deutlich größer als der Innendurchmesser des Gleitrings 81 und als der Außendurchmesser der Welle 4. Der Gleitring 83 ist aus entsprechendem Material wie der Gleitring 81, d.h. ebenfalls aus keramischem Material, z.B. Siliciumcarbid. Der Gleitring 83 ist drehfest mit der Nabe 6 verbunden. Als Verbindungselement ist ein Gummibalg 84 vorgesehen, der auf der Welle 4 gelagert und sich mit seinem einen Stirnende an dem Gleitring 83 und sich mit seinem anderen Stirnende an der inneren Grundfläche der Ausnehmung 7 in der Nabe unter Ausbildung einer nabenseitigen Dichtfläche abstützt. Der Gummibalg 84 wird dabei von einer den Gummibalg umgebenden Schraubenfeder 85 axial gespannt, so daß er mit seinem einen Ende dicht und drehfest an die Grundfläche in der Ausnehmung 7 der Nabe 6 gepreßt wird und sein anderes Stirnende an den Gleitring 83 axial angepreßt wird.
Die Nabe 6 ist so ausgebildet, daß sie sich zu ihrem von dem Propeller 5 abgewandten Stirnende hin verjüngt, so daß die Außenseite der Nabe 6, d.h. die Außenwandung der Nabe 6 im wesentlichen konisch ist. Ebenfalls konisch ist die Innenwandung der topfförmigen Ausnehmung 3.

Der zwischen der Außenseite der Nabe 6 und der Innenwandung der topfförmigen Gehäuseausformung 3 gebildete Ringspalt 9 erweitert sich zum oberen Austrittsende hin. Sowohl der Außendurchmesser als auch der Innendurchmesser des Ringspalts nehmen über den Verlauf des Ringspalts 9 von innen nach außen hin zu. Dabei nimmt der Außendurchmesser stärker zu als der Innendurchmesser. Der jeweilige Zuwachs ist gleichmäßig, vorzugsweise konstant, über den Verlauf von innen nach außen, so daß der Querschnitt des Ringspalts in axialer Richtung von innen nach außen also kontinuierlich zunimmt.

In Fig. 1 ist der Konuswinkel α der Nabe 6, der Konuswinkel γ der topfförmigen Gehäuseausnehmung 3 und der Konuswinkel β der konischen Erweiterung des Ringspalts 9 eingezeichnet. Der Winkel α ist der Winkel, den die zentrale Achse A der Nabe 6 mit der Außenwandung der Nabe 6 bildet, wobei die Schenkel des Winkels α in einer Schnittebene liegen, in der die Achse A liegt. Der Winkel α liegt bei dem in Fig. 1 dargestellten Ausführungsbeispiel bei 1°. Der Winkel γ ist der Winkel, der die mit der zentralen Achse A der Nabe 6 fluchtende zentrale Achse der Gehäuseausnehmung 3 mit der Innenwandung der Gehäuseausnehmung 3 bildet, wobei die Schenkel des Winkels γ in einer Schnittebene liegen, in der die Achse A liegt. Der Winkel γ liegt bei dem in Fig. 1 dargestellten Ausführungsbeispiel bei 2°. Der Winkel β ist der Winkel der konischen Erweiterung des Ringspalts 9, wobei der Winkel β zwischen der Außenwandung der Nabe 6 und der Innenwandung der Gehäuseausnehmung 3 gebildet ist, wobei die Schenkel des Winkels β in einer Schnittebene liegen, in der die Achse A liegt. Der Winkel β liegt bei dem in Fig. 1 dargestellten Ausführungsbeispiel bei 2°.

Bei abgewandelten Ausführungsbeispielen, die vom Grundsatz her den konstruktiven Aufbau wie das Ausführungsbeispiel in Fig. 1 aufweisen, können die Winkel α, γ und β andere Werte haben. Der Winkel α kann einen Wert aufweisen, der im Bereich zwischen 0,5° bis 10° liegt. Der Winkel γ kann einen Wert aufweisen, der im Bereich zwischen 1° bis 13° liegt und der Winkel β kann einen Wert aufweisen, der im Bereich zwischen 0,5° und 3° liegt.

Auf der konischen Außenwandung der Nabe 6 ist eine spiralförmige Erhebung 10 ausgebildet, die sich, die Nabe spiral- oder schraubenartig umgebend, von dem vom Propeller abgewandten Stirnende der Nabe bis zur Unterseite des Propellers 5 erstreckt. Diese sich spiralförmig um die äußere Umfangsfläche der Nabe 6 erstreckende Erhebung 10 ist als eine im Querschnitt im wesentlichen rechteckige Erhebung gegenüber der Nabenaußenwandung ausgebildet. Die radiale Höhe y der Erhebung nimmt entlang ihres Verlaufs zum Propeller hin zu, so daß zwischen der radialen Außenseite der Erhebung und der Innenwandung der topfförmigen Gehäuseausnehmung 3 ein im wesentlichen konstanter Spalt mit radialer Breite x gebildet wird.

Demgegenüber nimmt, wie bereits erwähnt, die Querschnittbreite q des Ringspalts zwischen der Außenwandung der Nabe 6 und der Innenwandung der topfförmigen Gehäuseausnehmung mit dem Winkel β in axialer Richtung nach außen hin zu, weil die Innenwandung der Ausnehmung 3 stärker konisch ist als die Konizität der Außenwandung der Nabe 6 ist. Die Konizität der spiralförmigen Ausformung 10 ist gleich wie die Konizität der Innenwandung der topfförmigen Ausnehmung 3 des Gehäuses, d.h. jeweils mit Konuswinkel γ, so daß im Bereich der spiralförmigen Ausformung jeweils die lichte Spaltbreite x zur Innenwandung der topfförmigen Gehäuseausnehmung 3, wie oben erwähnt, konstant ist.

Bei dem in Fig. 1 dargestellten Ausführungsbeispiel liegt die Querschnittsbreite q des ringförmigen Spalts 9 ausgangsseitig bei 3,5 mm. Die radiale Höhe y der spiralförmigen Ausformung 10 liegt ausgangsseitig, d.h. im Bereich des Ausgangs des Ringspalts 9 bei mindestens 3 mm. Im bodenseitigen Bereich des Ringspalts 9 ist die radiale Höhe y entsprechend geringer. Der Abstand x ist über die gesamte axiale Länge des Ringspalts 9 konstant und liegt bei maximal 0,5 mm.

Bei abgewandelten Ausführungsbeispielen, die vom Grundsatz her gleichen konstruktiven Aufbau wie das Ausführungsbeispiel in Fig. 1 aufweisen, kann der Abstand x in einem Bereich von 0,2 mm bis 3 mm liegen und zwar vorzugsweise konstant bei einem ausgewählten Wert in diesem Bereich. Die radiale Höhe y der spiralförmigen Ausnehmung 10 kann im Bereich von 2 mm bis 10 mm liegen. Vorzugsweise ist auch bei diesen abgewandelten Ausführungsbeispielen vorgesehen, daß die radiale Höhe y zum Propeller hin zunimmt, d.h. im propellernahen Bereich ihre maximale Höhe aufweist. Die Querschnittsbreite q des ringförmigen Spalts 9 kann bei diesem abgewandeltem Ausführungsbeispiel in einen Bereich zwischen 2,2 mm bis 13 mm liegen. Auch bei diesen abgewandelten Ausführungsbeispielen ist diese Querschnittsbreite q des ringförmigen Spalts 9 vorzugsweise nicht konstant über die axiale Erstreckung des Spalts, sondern die Querschnittsbreite q nimmt zum Propeller hin, d.h. zum Ausgang des Spalts 9 hin unter Ausbildung des Winkels β zu.

Die spiralförmige Ausformung 10 in Verbindung mit dem Ringspalt 9 bildet eine Strömungsleiteinrichtung, die bei Drehung des Propellers 5 mit der Nabe eine von der Dichtung 8 weggerichtete Strömung in der topfförmigen Gehäuseausformung 3 erzeugt, mit der eine Ablagerung von Partikeln in dem Medium im Bereich der Dichtung bzw. im Bereich des Grunds der topfförmigen Gehäuseausformung 3 entgegen gewirkt wird. D.h. die in dem Spalt 9 drehende Nabe mit der spiralförmigen Ausformung 10 erzeugt eine nach dem Prinzip einer Schneckenpumpe fördernde Wirkung, die das Medium mitsamt der eventuellen Ablagerungen aus dem Ringspalt 9 herausfördert.

Die Welle 4 ist mit einem in Fig. 1 nicht dargestellten Elektro-Motor, gegebenenfalls über ein zwischengeschaltetes Getriebe, antriebsmäßig verbunden. Die Welle 4 kann hierbei auch unmittelbar als die Motorabtriebswelle ausgebildet sein. Der nicht dargestellte Motor ist in dem Gehäuse in einem Abschnitt gelagert, der als sogenanntes Motorgehäuse 15 ausgebildet ist. Der obere Abschnitt dieses Motorgehäuses 15 ist in Fig. 1 gezeigt. In dem Motorgehäuse 15 ist ein Drehlager 16 abgestützt, in dem die das Lager hindurchgreifende Welle 4 drehgelagert ist. Zur Abdichtung der Welle 4 zwischen dem Motorgehäuse 15 und dem übrigen Gehäuse, d.h. dem Dichtungsgehäuse 2 ist eine Gleitringdichtung 18 vorhanden. Die Gleitringdichtung 18 ist gleich aufgebaut wie die Gleitringdichtung 8. Sie weist einen mit dem Motorgehäuse über eine Winkelmanschette 182 drehfest angeordneten keramischen Gleitring 181 und einen mit der Welle 4 drehfesten keramischen Gleitring 183 auf, der über einen mit der Welle 4 drehfesten Gummibalg 184 mittels einer den Gummibalg 184 umgebenden Schraubenfeder 185 beaufschlagt ist. Der Gummibalg 184 mit der Schraubenfeder 185 stützt sich axial an zwei Ringscheiben 186 ab, die an einem in einer radialen Nut 187 aufgenommenen Sprengring 188 ihrerseits axial abgestützt sind.

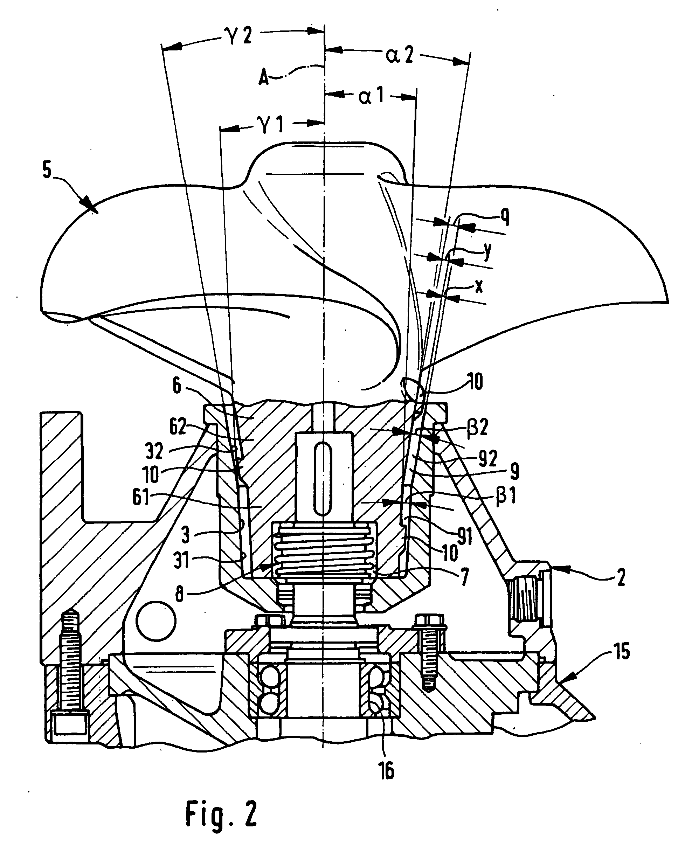

In Fig. 2 ist ein Ausführungsbeispiel eines Rührwerks mit größerem Propeller dargestellt. Das Rührwerk ist gleich aufgebaut wie bei dem Ausführungsbeispiel in Fig. 1, wobei jedoch der Propeller 5 größer dimensioniert ist und anders geformt ist hinsichtlich Größe und Form der Propellerblätter und hinsichtlich Durchmesser und Ausgestaltung der Nabe 6. Die Nabe 6 weist zwei axial hintereinander angeordnete Abschnitte unterschiedlicher Konizität auf. Der Konuswinkel α zwischen der zentralen Achse A und der Außenwandung der Nabe 6 ist in diesen beiden Abschnitten also unterschiedlich groß und zwar in dem vom Propeller entfernten Abschnitt 61 liegt dieser Winkel α1 bei 2° und in dem axial daran anschließenden propellernahen Abschnitt 62 liegt der Winkel α2 bei 9°. Entsprechend ist die topfförmige Gehäuseausnehmung 3 ausgebildet. Sie weist einen bodennahen Abschnitt 31 auf, der geringere Konizität als der ausgangsseitige Abschnitt 32 besitzt. Der Konuswinkel γ1 des bodenseitigen Abschnitts 31 liegt bei dem Ausführungsbeispiel in Fig. 2 bei 3°. Der Konuswinkel γ2 des axial daran anschließenden Abschnitts 32, der sich bis zum Ausgang der topfförmigen Ausformung 3 erstreckt, beträgt bei dem dargestellten Ausführungsbeispiel 10°. Es ergibt sich damit, daß der zwischen der Außenwandung der Nabe 6 und der Innenwandung der Gehäuseausnehmung 10 ausgebildete ringförmige Spalt 9 ebenfalls zwei axial hintereinander angeordnete Abschnitte 91, 92 aufweist. Sie nehmen jeweils zum Propeller hin zu und zwar der Abschnitt 91 des Ringspalts 9 mit dem Winkel β1 und der Abschnitt 92 mit dem Winkel β2. Bei dem dargestellten Ausführungsbeispiel sind die Winkel β1 und β2 jeweils gleich. Sie liegen bei 1°. Die radiale Höhe y der spiralförmigen Ausformung 10 liegt im Bereich des Ausgangs des ringförmigen Spalts 9 bei 4 mm. In entsprechender Weise wie bei dem Ausführungsbeispiel in Fig. 1 nimmt die radiale Höhe y vom propellerfernen Ende zum propellernahen Ende hin zu. Diese Zunahme ist so dimensioniert, daß die radiale Breite x des lichten Spalts zwischen der Außenseite der spiralförmigen Erhebung 10 und der Innenwandung der Gehäuseausnehmung 3 über die gesamte axiale Erstreckung des ringförmigen Spalts 9 konstant ist. Im Falle des Ausführungsbeispiels in Fig. 2 ist dieser Abstand x konstant 1 mm.

Bei abgewandelten Ausführungsbeispielen, die den im Prinzip gleichen konstruktiven Aufbau wie das Ausführungsbeispiel in Fig. 2 aufweisen, können die Konuswinkel α1 und α2 der Nabe 6 und die Konuswinkel γ1 und γ2 der Gehäuseausnehmung 3 andere Werte aufweisen. Der Konuswinkel α1 liegt bei diesen Ausführungsbeispielen vorzugsweise bei einem Wert zwischen 0,5° bis 10° und der Konuswinkel α2 jeweils größer und zwar bei einem Wert bis zu 15°. Der Konuswinkel γ1 der Gehäuseausformung 3 liegt vorzugsweise in einem Bereich von 1° bis 13° und der Konsuwinkel γ2 entsprechend größer vorzugsweise in einem Bereich bis 18°. Die radiale Breite q des Ringspalts 9 kann bei diesen Ausführungsbeispielen vorzugsweise 2,2 mm bis 13 mm liegen. Die radiale Höhe y der spiralförmigen Erhebung 10 kann vorzugsweise im Bereich zwischen 2 mm bis 10 mm liegen und zwar vorzugsweise ebenfalls zum Propeller hin zunehmend. Der Abstand x zwischen der Außenseite der spiralförmigen Erhebung 10 und der Innenwandung der Gehäuseausformung 3 ist auch bei diesen abgewandelten Ausführungsbeispielen vorzugsweise konstant. Dieser konstante Abstand x liegt vorzugsweise bei Werten zwischen 0,2 mm bis 3 mm.

Bei abgewandelten Ausführungsbeispielen kann die Außenwandung der Nabe 6 auch nicht konisch , d.h. z.B. zylindrisch ausgebildet sein. Es kann im Unterschied zu den Ausführungsbeispielen in Figur 1 und 2, bei dem die Innenwandung der topfförmigen Ausnehmung 3 bzw. der beiden axialen Abschnitte 31, 32 der topfförmigen Gehäuseausnehmung 3 des Gehäuses als Wandung ohne irgendwelche Erhöhungen oder Vertiefungen ausgebildet ist, auch vorgesehen sein, daß eine spiralförmige Ausformung auch auf der Innenfläche der topfförmigen Ausnehmung 3 ausgebildet ist. Ferner können zusätzlich zu den spiralförmigen Erhebungen auf der Außenwandung der Nabe als spiralförmige Ausformungen auch entsprechende Nuten der Wandung ausgebildet sein.

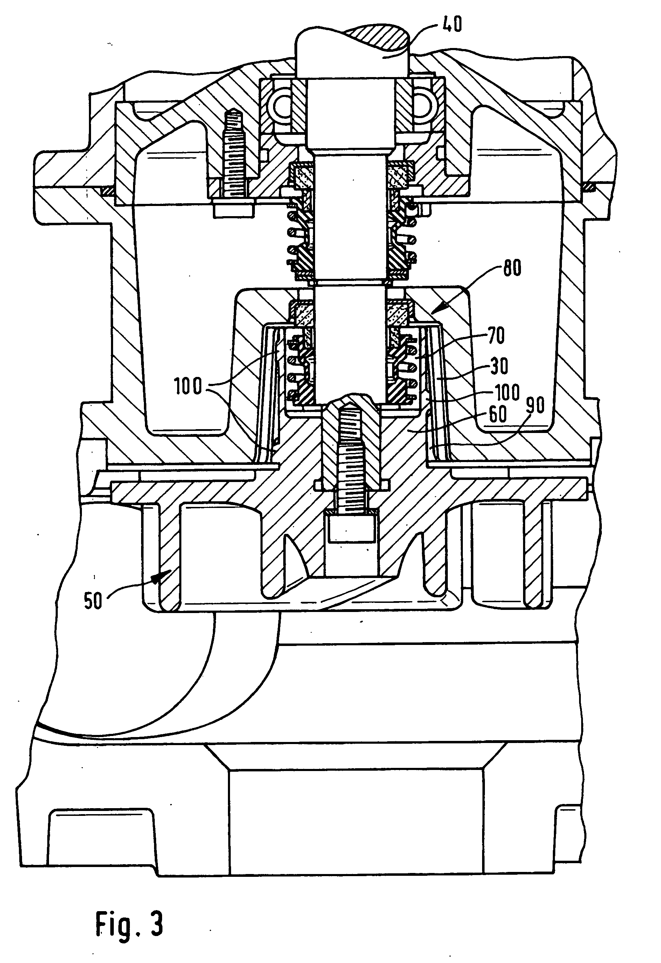

Bei dem Ausführungsbeispiel in Fig. 3 handelt es sich um eine Pumpe und zwar um eine Tauchpumpe, die also ebenfalls unter Wasser angeordnet wird. Sie weist eine motorisch angetriebene Welle 40 auf, auf deren antriebsseitigem freien Ende ein Laufrad 50 mit Nabe 60 drehfest angeordnet ist. Die Welle 40 ist in entsprechender Weise wie bei dem Ausführungsbeispiel in Fig. 1 eine topfförmige Ausformung 30 eines Dichtungsgehäuses durchgreifend im Gehäuse 10 der Pumpe gelagert. Zwischen der Innenwandung der topfförmigen Ausformung 30 und der Außenseite der Nabe 60 ist ebenfalls ein sich konisch erweiternder Ringspaltraum 90 ausgebildet, wobei auf der Außenseite der Nabe 60 ebenfalls eine sich entlang der Nabe spiralförmig erstreckende Erhebung 100 ausgebildet ist. Auch bei diesem Ausführungsbeispiel ist die Konizität der Innenwandung der topfförmigen Gehäuseausnehmung 30 stärker als die Konizität der Nabe 60 und die radiale Höhe der spiralförmigen Erhebung 100 nimmt ebenfalls während ihres spiralförmigen Verlaufs vom Stirnende der Nabe zur Unterseite des Laufrads 50 hin zu, weist also gleiche Konizität wie die Innenwandung der Gehäuseausformung 30 auf, so daß der Spaltbereich zwischen der radialen Außenseite der Erhöhung 100 und der Innenwandung der topfförmigen Ausformung 30 konstant verbleibt, wobei jedoch der übrige lichte Querschnitt des ringförmigen Spaltraums zum Austrittsende hin, d.h. in Richtung zum Laufrad 50 hin zunimmt.

Die spiralförmige Ausformung 100 im Außenumfang der Nabe 60 bewirkt bei Drehung der Welle 40 mit dem Laufrad 50 mit Nabe 60 eine von der Dichtung 80 weggerichtete Strömung im Ringspalt 90, die aus dem Ringspalt 90 hinausführt, wodurch eine Ablagerung von Partikeln in dem Medium im Bereich der Dichtung 80 entgegengewirkt wird.

Die topfförmige Gehäuseausformung 30 kann mit in Förderrichtung laufenden gehäuseseitigen Nuten versehen sein, die das Herausfördern der Fremdkörper dahingehend unterstützen, daß sie das Mitdrehen derselben auf der Nabe verhindern. Diese Nuten sind vorzugsweise axial gerichtet, d.h. parallel zur Radnabe. Es können mehrere solche Nuten vorgesehen sein, vorzugsweise gleichmäßig über den Umfang verteilt, z.B. 4 Naben jeweils zueinander um 90° versetzt. Es kann aber auch nur eine solche Nut vorgesehen sein, axial oder spiralförmig verlaufend.

Es sind auch abgewandelte Ausführungsbeispiele vorgesehen, bei denen es sich um Pumpen handelt, bei denen als Pumpenaggregat ein Rührwerk, beispielsweise mit dem Aufbau der in Fig. 1 und 2 dargestellten Ausführungsbeispiele, eingesetzt wird. Es handelt sich um sogenannte Rezirkulationspumpen. Das zum Einsatz kommende Rührwerk ist hierbei so angeordnet, daß der Propeller 5 in einem Pumpengehäuse angeordnet ist, in dessen Innenraum der Propeller 5 hineinragt. Der Innenraum des Pumpengehäuses ist von dem Pumpenmedium ausgefüllt, wobei im Pumpeninnenraum auf der einen Seite die Zuleitung und auf der anderen Seite die druckseitige Ableitung mündet. Bei Drehung des Propellers 5 wird eine Pumpwirkung erzeugt, wodurch das Pumpenmedium aus der saugseitigen Zuleitung in die druckseitige Ableitung gefördert wird. Die Leistung einer derartig aufgebauten Rezirkulationspumpe unterscheidet sich von einer Pumpe mit Laufrad, wie sie z.B. in Fig. 3 dargestellt ist, darin, daß sie relativ geringe Förderhöhe erbringt, jedoch relativ hohe Volumenströme fördert. Bei derart aufgebauten Rezirkulationspumpen mit Propeller handelt es sich vorzugsweise um Ausführungen als Tauchpumpen, die also in grundsätzlich gleicher Anordnung eingesetzt werden, wie die in Fig. 3 dargestellte Tauchpumpe.

## Patentansprüche

1. Maschine, vorzugsweise Strömungsmaschine, z.B. Pumpe, Rührwerk oder dergleichen,
mit einem stationären Gehäuse (1, 2, 20),
mit einer in dem Gehäuse gelagerten, motorisch angetriebenen Welle (4, 40) mit einem vorzugsweise drehfest verbundenen Rad zum Bewegen eines fluiden Mediums, insbesondere Laufrad (50), Propeller (5) oder dergleichen,
wobei die Welle (4, 40) eine topfförmige Gehäuseausnehmung (3, 30) koaxial durchgreift und das am freien Ende der Welle (4, 40) angeordnete Rad (5, 50) außerhalb des Gehäuses (2, 20) angeordnet ist und dabei die auf der Welle (4, 40) angeordnete Nabe (6, 60) des Rads in die topfförmige Gehäuseausnehmung (3, 30) eingreift unter Ausbildung eines mit dem fluiden Medium füllbaren ringförmigen Spalts (9, 90) zwischen der Innenwandung der topfförmigen Gehäuseausnehmung (3, 30) und der Außenwandung der Nabe (6, 60),
mit einer die Welle (4, 40) und/oder die Nabe (6, 60) und das Gehäuse zum Medium hin abdichtenden Dichtung (8, 80) und einer im Bereich der Nabe (6, 60) drehfest mit dieser angeordneten Spiraleinrichtung (10, 100), um zur Verhinderung einer Ablagerung von Partikeln eine in dem ringförmigen Spalt (9, 90) aus diesem herausgerichtete Strömung zu erzeugen,
wobei der Außendurchmesser des ringförmigen Spalts (9, 90) zwischen der Innenwandung der topfförmigen Gehäuseausnehmung (3, 30) und der Außenwandung der Radnabe (6, 60) in seinem Verlauf zu dem Rad (5, 50) hin zunehmend ausgebildet ist,
**dadurch gekennzeichnet,**
**daß** die Querschnittsbreite (9) des ringförmigen Spalts (9, 90) zwischen der Innenwandung der topfförmigen Gehäuseausnehmung (3, 30) und der Außenwandung der Radnabe (6, 60) in seinem Verlauf zu dem Rad (5, 50) hin zunehmend ausgebildet ist und
**daß** die Spiraleinrichtung (10, 100) durch eine spiralförmig verlaufende Erhebung (10, 100) in der äußeren Umfangsfläche der Radnabe (6, 60) ausgebildet ist, vorzugsweise als spiralförmige Profilierung der Außenwandung der Radnabe, und
**daß** die radiale Höhe der spiralförmig verlaufenden Erhebung (10, 100) während ihres Verlaufs zum Rad (5, 50) hin zunehmend ausgebildet ist.

2. Maschine nach Anspruch 1,
**dadurch gekennzeichnet,**
**daß** die radiale Außenwand der spiralförmig verlaufenden Erhebung (10, 100) während ihres Verlaufs konstanten Abstand zur Innenwandung der topfförmigen Ausnehmung (3, 30) des Gehäuses (2, 20) aufweist.

3. Maschine nach einem der vorangehenden Ansprüche,
**dadurch gekennzeichnet,**
**daß** die Außenwandung der Radnabe (6, 60) konisch ausgebildet ist und
**daß** die Innenwandung der topfförmigen Gehäuseausnehmung (3, 30) konisch ausgebildet ist, und
**daß** ein die Konizität der Radnabe (6, 60) bestimmender Konuswinkel (α) kleiner ist als ein die Konizität der topfförmigen Gehäuseausnehmung (3, 30) bestimmender Konuswinkel (γ).

4. Maschine nach Anspruch 3,
**dadurch gekennzeichnet,**
**daß** ein die Konizität der Radnabe (6,60) bestimmender Konuswinkel (α) auf verschiedenen axialen Abschnitten (61, 62) der Radnabe (6, 60) unterschiedlich groß ausgebildet ist.

5. Maschine nach einem der Ansprüche 3 oder 4,
**dadurch gekennzeichnet,**
**daß** ein die Konizität der topfförmigen Gehäuseausnehmung (3, 30) bestimmender Konuswinkel (γ) auf verschiedenen axialen Abschnitten (31, 32) der topfförmigen Gehäuseausformung (3, 30) unterschiedlich groß ausgebildet ist, vorzugsweise in Abhängigkeit von dem die Konizität der Radnabe (6, 60) bestimmenden Konuswinkel (α), z.B. unter Ausbildung eines sich kontinuierlich erweiternden Spalts (9, 90, β).

6. Maschine nach einem der vorangehenden Ansprüche
**dadurch gekennzeichnet,**
**daß** die Radnabe (6, 60) eine an der vom Rad (5, 50) abgewandten Stirnseite hin offene koaxiale Ausnehmung (7, 70) aufweist, in der zumindest ein Teil der Dichtung angeordnet ist,
wobei die Dichtung (8, 80) einen eine gehäuseseitige Dichtfläche aufweisenden gehäusefesten Gleitring (81, 181) aufweist, der im Bereich einer von der Welle (4, 40) durchsetzten Gehäuseöffnung angeordnet ist, und
wobei die Dichtung einen eine wellenseitige und/oder nabenseitige Dichtfläche aufweisenden mit der Welle (4, 40) bzw. Nabe (6, 60) drehfesten Gleitring (83, 183) aufweist, der innerhalb der Ausnehmung (7, 70) der Nabe (6, 60) angeordnet ist und/oder mit einem eine wellenseitige und/oder nabenseitige Dichtfläche aufweisenden elastischem Dichtelement (84, 184) zusammenwirkt, das innerhalb der Ausnehmung (7, 70) der Nabe (6, 60) angeordnet ist.

7. Rad, als Laufrad (50) oder Propeller (5) ausgebildet, vorzugsweise zum Einsatz in einer Strömungsmaschine, z.B. Pumpe, Rührwerk oder dergleichen,
mit Propellerflügeln bzw. Laufradschaufeln und mit einer Radnabe, vorzugsweise zum Eingriff in eine topfförmige Gehäuseausnehmung (3, 30), insbesondere eines Dichtungsgehäuses (2) der Strömungsmaschine,
wobei die Radnabe (6, 60) einstückig mit den Propellerflügeln bzw. Laufradschaufeln verbunden ist und auf ihrer Außenwandung eine Spiraleinrichtung (10) aufweist, **dadurch gekennzeichnet, daß** die Spiraleinrichtung (10, 100) sich an der Außenseite der Radnabe (6, 60) von einer von den Propellerflügeln bzw. Radschaufeln entfernten Position auf der Radnabe, von dem von den Propellerflügeln bzw. Radschaufeln entferntem Stirnende der Radnabe (6, 60) bis zur Unterseite der Propellerflügel bzw. Radschaufeln hin erstreckt,
wobei vorgesehen ist,
daß die Spiraleinrichtung (10, 100) durch eine spiralförmig verlaufende Erhebung (10, 100) in der äußeren Umfangsfläche der Radnabe (6, 60) ausgebildet ist, und
die radiale Höhe (y) der spiralförmig verlaufenden Erhebung (10, 100) während ihres Verlaufs zu den Propellerflügeln bzw. Radschaufeln hin zunehmend groß ausgebildet ist.

8. Rad nach Anspruch 7,
**dadurch gekennzeichnet,**
**daß** die radiale Höhe (y) der Erhebung (10, 100) in einem Größenbereich von 2 mm bis 10 mm liegt, insbesondere in einem Größenbereich um 3 mm, vorzugsweise bei einem Durchmesser der Radnabe von 30 bis 50 mm oder in einem Größenbereich von 4 mm, vorzugsweise bei einem Durchmesser der Radnabe von 50 bis 90 mm.

9. Rad nach einem der Ansprüche 7 oder 8,
**dadurch gekennzeichnet,**
**daß** die Außenwandung der Radnabe (6, 60) konisch ausgebildet ist, und
**daß** ein die Konizität der Radnabe (6, 60) bestimmender Konuswinkel (α) auf verschiedenen axialen Abschnitten (61, 62) der Radnabe (6, 60) unterschiedlich groß ausgebildet ist.

10. Rad nach einem der Ansprüche 7 bis 9,
**dadurch gekennzeichnet,**
**daß** die Radnabe (6, 60) an ihrem von den Propellerflügein bzw. Radschaufeln entfernten Stirnende eine nach außen offene koaxiale Ausnehmung, vorzugsweise zur drehfesten Aufnahme eines Wellenendes und/oder zur Aufnahme einer Dichtungseinrichtung aufweist.

11. Rad nach einem der Ansprüche 7 bis 10,
**dadurch gekennzeichnet,**
**daß** die Radnabe (6, 60) in dem Bereich, in dem die Propellerflügel angeordnet, vorzugsweise angeformt sind, eine Verdickung des Nabenaußendurchmessers aufweist, und
**daß** die Verdickung der Radnabe als ein verdickter axialer Abschnitt der Radnabe ausgebildet ist, der im wesentlichen kugelförmig oder zylinderförmig ausgebildet ist, und
**daß** zwischen der Verdickung bzw. dem verdickten Abschnitt der Radnabe (6, 60) und dem daran anschließenden axialen Abschnitt der Radnabe (6, 60) ein Übergangsbereich ausgebildet ist, der abgeschrägt oder abgerundet oder stufenförmig ausgebildet ist, und
**daß** die Radnabe im Bereich der Verdickung bzw. des verdickten axialen Abschnitts ihren größten Außendurchmesser aufweist.

## Claims

1. Machine, preferably a fluid-flow machine, e.g. a pump, agitator or the like,
having a stationary housing (1, 2, 20),
having a motor-driven shaft (4, 40) which is mounted in the housing and has a wheel preferably connected in a rotationally fixed manner for moving a fluid medium, in particular an impeller (50), propeller (5) or the like,
the shaft (4, 40) passing coaxially through a pot-shaped housing recess (3, 30), and the wheel (5, 50) arranged on the free end of the shaft (4, 40) being arranged outside the housing (2, 20) and at the same time the hub (6, 60) of the wheel, arranged on the shaft (4, 40), engaging in the pot-shaped housing recess (3, 30) while forming an annular gap (9, 90), which can be filled with the liquid medium, between the inner wall of the pot-shaped housing recess (3, 30) and the outer wall of the hub (6, 60),
having a seal (8, 80), sealing off the shaft (4, 40) and/or the hub (6, 60) and the housing towards the medium, and a spiral device (10, 100), arranged in the region of the hub (6, 60) in a rotationally fixed manner with the latter, in order to produce a flow in the annular gap (9, 90) for preventing a deposit of particles, this flow being directed out of the annular gap (9, 90),
the outside diameter of the annular gap (9, 90) between the inner wall of the pot-shaped housing recess (3, 30) and the outer wall of the wheel hub (6, 60) being designed so as to run with increasing size towards the wheel (5, 50),
**characterized in that** the cross-sectional width (q) of the annular gap (9, 90) between the inner wall of the pot-shaped housing recess (3, 30) and the outer wall of the wheel hub (6, 60) is designed so as to run with increasing size towards the wheel (5, 50), and **in that** the spiral device (10, 100) is formed by a spirally running prominence (10, 100) in the outer circumferential surface of the wheel hub (6, 60), preferably as spiral profiling of the outer wall of the wheel hub, and **in that** the radial height of the spirally running prominence (10, 100) is designed so as to run with increasing size towards the wheel (5, 50).

2. Machine according to Claim 1, **characterized in that** the radial outer wall of the spirally running prominence (10, 100) runs at a constant distance from the inner wall of the pot-shaped recess (3, 30) of the housing (2, 20).

3. Machine according to either of the preceding claims, **characterized in that** the outer wall of the wheel hub (6, 60) is of conical design, and **in that** the inner wall of the pot-shaped housing recess (3, 30) is of conical design, and **in that** a cone angle (α) determining the conicity of the wheel hub (6, 60) is smaller than a cone angle (γ) determining the conicity of the pot-shaped housing recess (3, 30).

4. Machine according to Claim 3, **characterized in that** a cone angle (α) determining the conicity of the wheel hub (6, 60) is designed to be of different size on different axial sections (61, 62) of the wheel hub (6, 60).

5. Machine according to either of Claims 3 and 4, **characterized in that** a cone angle (γ) determining the conicity of the pot-shaped housing recess (3, 30) is designed to be of different size on different axial sections (31, 32) of the pot-shaped housing recess (3, 30), preferably as a function of the cone angle (α) determining the conicity of the wheel hub (6, 60), e.g. while forming a continuously widening gap (9, 90, β).

6. Machine according to one of the preceding claims, **characterized in that** the wheel hub (6, 60) has a coaxial recess (7, 70) which is open at the end face remote from the wheel (5, 50) and in which at least one part of the seal is arranged, the seal (8, 80) having a sliding ring (81, 181) which has a housing-side sealing face, is fixed to the housing and is arranged in the region of a housing opening through which the shaft (4, 40) passes, and the seal having a sliding ring (83, 183) which has a shaft-side and/or hub-side sealing face, is rotationally fixed with the shaft (4, 40) or hub (6, 60) and is arranged inside the recess (7, 70) of the hub (6, 60) and/or interacts with an elastic sealing element (84, 184) which has a shaft-side and/or hub-side sealing face and is arranged inside the recess (7, 70) of the hub (6, 60).

7. Wheel, designed as an impeller (50) or a propeller (5), preferably for use in a fluid-flow machine, e.g. a pump, agitator or the like, having propeller blades or impeller blades and having a wheel hub, preferably for engaging in a pot-shaped housing recess (3, 30), in particular of a seal housing (2) of the fluid-flow machine, the wheel hub (6, 60) being connected in one piece with the propeller blades or impeller blades and having a spiral device (10) on its outer wall, **characterized in that** the spiral device (10, 100) extends on the outside of the wheel hub (6, 60), from a position on the wheel hub that is remote from the propeller blades or wheel blades, from that end face of the wheel hub (6, 60) which is remote from the propeller blades or wheel blades up to the underside of the propeller blades or wheel blades, provision being made for the spiral device (10, 100) to be formed by a spirally running prominence (10, 100) in the outer circumferential surface of the wheel hub (6, 60), and for the radial height (y) of the spirally running prominence (10, 100) to be designed so as run with increasing size towards the propeller blades or wheel blades.

8. Wheel according to Claim 7, **characterized in that** the radial height (y) of the prominence (10, 100) has a size of around 2 mm to 10 mm, in particular a size of around 3 mm, preferably at a diameter of the wheel hub of 30 to 50 mm, or a size of 4 mm, preferably at a diameter of the wheel hub of 50 to 90 mm.

9. Wheel according to either of Claims 7 and 8, **characterized in that** the outer wall of the wheel hub (6, 60) is of conical design, and **in that** a cone angle (α) determining the conicity of the wheel hub (6, 60) is designed to be of different size on different axial sections (61, 62) of the wheel hub (6, 60).

10. Wheel according to one of Claims 7 to 9, **characterized in that** the wheel hub (6, 60), at its end face remote from the propeller blades or wheel blades, has a coaxial recess open outwards, preferably for accommodating a shaft end in a rotationally fixed manner and/or for accommodating a seal device.

11. Wheel according to one of Claims 7 to 10, **characterized in that** the wheel hub (6, 60) has an enlargement of the hub outside diameter in the region in which the propeller blades are arranged, preferably integrally formed, and **in that** the enlargement of the wheel hub is designed as an enlarged axial section of the wheel hub, this section being of essentially spherical or cylindrical design, and **in that** a transition region is formed between the enlargement or the enlarged section of the wheel hub (6, 60) and the adjoining axial section of the wheel hub (6, 60), this transition region being of bevelled, rounded-off or stepped design, and **in that** the wheel hub has its greatest outside diameter in the region of the enlargement or of the enlarged axial section.

## Revendications

1. Machine, de préférence machine à circulation de fluide, p. ex. pompe, mélangeur ou analogue, du type comportant :
- un carter immobile (1, 2, 20),
- un arbre (4, 40), installé dans le carter et entraîné par un moteur,
- une roue, de préférence solidaire en rotation, en vue de la mise en mouvement d'un milieu fluide, en particulier une roue à aubes (50), une hélice (5) ou analogue, l'arbre (4, 40) traversant coaxialement un évidement en forme de cuvette (3, 30) du carter, et la roue (5, 50) montée à l'extrémité libre de l'arbre (4, 40) étant située à l'extérieur du carter (2, 20) et le moyeu (6, 60) de la roue montée sur l'arbre (4, 40) traversant l'évidement en forme de cuvette (3, 30) du carter, en créant une fente annulaire (9, 90) pouvant être remplie du milieu fluide entre la paroi intérieure de l'évidement en forme de cuvette (3, 30) du carter et la paroi extérieure du moyeu (6, 60),
- une garniture (8, 80) assurant l'étanchéité vis-à-vis du milieu entre l'arbre (4, 40) et/ou le moyeu (6, 60) et le carter, et un système en spirale situé au voisinage du moyeu (6, 60) et solidaire en rotation avec celui-ci, en vue d'empêcher une accumulation, dans la fente annulaire (9, 90), de particules amenées par le courant sortant de celle-ci, le diamètre extérieur de la fente annulaire (9, 90) entre la paroi intérieure de l'évidement en forme de cuvette (3, 30) du carter et la paroi extérieure du moyeu de roue (6, 60) augmentant à mesure qu'elle s'éloigne de la roue (5, 50),
**caractérisée en ce que**
- la largeur de la section transversale (9) de la fente annulaire (9, 90) entre la paroi intérieure de l'évidement en forme de cuvette (3, 30) du carter et la paroi extérieure du moyeu de roue (6, 60) augmente en s'éloignant de la roue (5, 50),
- le système en spirale (10, 100) est constitué par un relief se déroulant en forme de spirale (10, 100) créé dans la surface périphérique extérieure du moyeu de roue (6, 60), de préférence un profilage en forme de spirale de la paroi extérieure du moyeu de roue,
- et la hauteur radiale du relief se déroulant en forme de spirale (10, 100) augmente à mesure qu'il s'éloigne de la roue (5, 50).

2. Machine selon la revendication 1, **caractérisé en ce que** la paroi extérieure radiale du relief se déroulant en forme de spirale (10, 100) présente, au cours de son déroulement, une distance constante de la paroi intérieure de l'évidement en forme de cuvette (3, 30) du carter (2, 20).

3. Machine selon l'une ou l'autre des revendications précédentes, **caractérisée en ce que** la paroi extérieure du moyeu de roue (6, 60) est de forme conique et la paroi intérieure de l'évidement en forme de cuvette (3, 30) du carter est de forme conique, et **en ce qu'**un angle de cône (α), correspondant à la conicité du moyeu de roue (6, 60) est plus petit qu'un angle de cône (γ) correspondant à la conicité de l'évidement en forme de cuvette (3, 30) du carter.

4. Machine selon la revendication 3, **caractérisée en ce qu'**un angle de cône (α), correspondant à la conicité du moyeu de roue (6, 60) a une valeur différente selon les différentes portions axiales (61, 62) du moyeu de roue (6, 60).

5. Machine selon l'une ou l'autre des revendications 3 ou 4, **caractérisée en ce qu'**un angle de cône (γ), correspondant à la conicité de l'évidement en forme de cuvette (3, 30) du carter, présente des valeurs différentes selon les différentes portions axiales (31, 32) de l'évidement en forme de cuvette (3, 30) du carter, de préférence en fonction de l'angle de cône (α) correspondant à la conicité du moyeu de roue (6, 60), par exemple,lors de la réalisation d'une fente s'élargissant de manière continue (9, 90, β).

6. Machine selon l'une quelconque des revendications précédentes, **caractérisée en ce que** le moyeu de roue (6, 60) présente un évidement coaxial (7, 70) s'ouvrant sur le côté frontal opposé à la roue (5, 50), dans lequel est placée au moins une partie de la garniture, la garniture (8, 80) présentant une bague de glissement (81, 181) solidaire du carter et présentant une surface d'étanchéisation du côté du carter, ladite bague étant placée dans la région d'une ouverture du carter traversée par l'arbre (4, 40), et la garniture (8, 80) présentant une bague de glissement (83, 183) solidaire en rotation de l'arbre (4, 40) ou du moyeu (6, 60), et présentant une surface d'étanchéisation du côté de l'arbre et/ou du côté du moyeu, ladite bague étant placée à l'intérieur de l'évidement (7, 70) du moyeu (6, 60), et/ou coopère avec un élément d'étanchéité élastique (84, 184), situé du côté de l'arbre et/ou du côté du moyeu, et qui est placé à l'intérieur de l'évidement (7, 70) du moyeu (6, 60).

7. Roue, constituant une roue à aubes (50) ou une hélice (5), de préférence destinée à être utilisée comme accessoire d'une machine à circulation de fluide, par exemple une pompe, un mélangeur ou analogue, du type comportant des palettes d'hélice ou des aubes de roue à aubes, et un moyeu de roue, de préférence prévu pour s'insérer dans un évidement en forme de cuvette (3, 30) du carter, en particulier un carter étanche (2) de la machine à circulation de fluide, le moyeu de roue (6, 60) étant réuni en une pièce unique avec les palettes d'hélice ou les aubes de roue à aubes, et présentant sur sa surface extérieure un système en spirale (10), **caractérisée en ce que** le système en spirale (10, 100) s'étend sur la face extérieure du moyeu de roue (6, 60), depuis un emplacement sur le moyeu de roue éloigné des palettes d'hélice ou des aubes de roue à aubes, duquel l'extrémité frontale du moyeu de roue (6, 60) éloignée des palettes d'hélice ou des aubes de roue à aubes s'éloigne jusqu'à la face inférieure des palettes d'hélice ou des aubes de roue à aubes, étant prévu que le système en spirale (10, 100) est constitué par un relief se déroulant en forme de spirale dans la surface périphérique extérieure du moyeu de roue (6, 60), et que la hauteur radiale (γ) du relief se déroulant en forme de spirale (10, 100) augmente au cours de son déroulement en s'éloignant des palettes d'hélice ou des aubes de roue à aubes.

8. Roue selon la revendication 7, **caractérisée en ce que** la hauteur radiale (γ) du relief (10, 100) est de l'ordre de 2 mm à 10 mm, en particulier de l'ordre de 3 mm, de préférence pour un diamètre du moyeu de roue de 30 à 50 mm, ou de l'ordre de 4 mm, de préférence pour un diamètre du moyeu de roue de 50 à 90 mm.

9. Roue selon l'une ou l'autre des revendications 7 ou 8, **caractérisée en ce que** la paroi extérieure du moyeu de roue (6, 60) est conique et **en ce qu'**un angle de cône (α), correspondant à une conicité déterminée du moyeu de roue (6, 60) prend des valeurs différentes pour des portions axiales différentes (61, 62) du moyeu de roue (6, 60).

10. Roue selon l'une quelconque des revendications 7 à 9, **caractérisée en ce que** le moyeu de roue (6, 60) présente, sur son extrémité frontale éloignée des palettes d'hélice ou des aubes de roue à aubes, un évidement axial ouvert vers l'extérieur, de préférence en vue de recevoir une extrémité d'arbre solidaire en rotation et/ou en vue de recevoir un système d'étanchéisation.

11. Roue selon l'une quelconque des revendications 7 à 10, **caractérisée en ce que** le moyeu de roue (6, 60) présente, dans la région où sont placées les palettes d'hélice, ou de préférence sont formées les palettes d'hélice, une augmentation du diamètre extérieur du moyeu, **en ce que** le grossissement du moyeu de roue constitue une portion axialement grossie du moyeu de roue, pratiquement de forme sphérique ou cylindrique, **en ce que** , entre le grossissement ou la portion grossie du moyeu de roue (6, 60) et la portion qui lui est réunie axialement du moyeu de roue (6, 60), est pratiquée une zone de raccordement qui est chanfreinée, arrondie ou à degrés, et **en ce que** le moyeu de roue présente, dans la région du grossissement ou de la portion axialement grossie, son plus grand diamètre extérieur.
